# NEUE EUROPÄISCHE PATENTSCHRIFT

(11) **EP 2 389 705 B2**
(45) Veröffentlichungstag und Bekanntmachung des Hinweises auf die Entscheidung über den Einspruch: **28.02.2018**
(45) Hinweis auf die Patenterteilung: 28.11.2012
(21) Anmeldenummer: 10700718.9
(22) Anmeldetag: 19.01.2010
(51) Int. Cl.: H01M 10/613, H01M 10/615, H01M 10/6555, H01M 10/6572

(54) **TEMPERIERTES BATTERIESYSTEM II**
TEMPERATURE-CONTROLLED BATTERY SYSTEM II
SYSTÈME DE BATTERIE À RÉGULATION THERMIQUE II

(30) Priorität: 23.01.2009 DE 102009005853
(43) Veröffentlichungstag der Anmeldung: 30.11.2011
(73) Patentinhaber: Li-Tec Battery GmbH, 01917 Kamenz (DE)
(72) Erfinder: LACHENMEIER, Walter, 53757 Sankt Augustin (DE); GUTSCH, Andreas, 59348 Lüdinghausen (DE); SCHÄFER, Tim, 99768 Harztor (DE)
(74) Vertreter: Moore, Derek
(86) Internationale Anmeldenummer: PCT/EP2010/000288
(87) Internationale Veröffentlichungsnummer: WO 2010/083983

(56) Entgegenhaltungen:
- EP-A1- 1 641 067
- EP-A2- 2 006 974
- DE-A1- 4 017 475
- DE-C1- 10 114 960
- FR-A1- 2 903 057
- JP-A- 11 176 487
- US-A1- 2003 064 283
- US-A1- 2004 174 138
- US-A1- 2008 311 466
- US-A1- 20060 216 582
- US-B1- 5 756 227

## Beschreibung

Die Erfindung betrifft ein Batteriesystem mit wenigstens einer Batterie, gemäß dem Oberbegriff des Anspruches 1. Die Erfindung wird im Zusammenhang mit Lithium-Ionen-Batterien beschrieben. Es wird darauf hingewiesen, dass die Erfindung auch unabhängig von der Chemie der Batterie oder auch für wiederaufladbare Batterien Anwendung finden kann.

Batterien, insbesondere Lithium-Ionen-Batterien sind aus dem Stand der Technik als umweltfreundliche Energiespeicher mit besonders hoher Leistungsfähigkeit bekannt. Als sogenannte Großbatterien werden diese insbesondere in modernen Elektro- und Hybridfahrzeugen für die Energiespeicherung verwendet. Daneben sind auch stationäre Batteriesysteme bekannt, bspw. zur Notstromversorgung von Gebäuden.

Infolge von Lade- und Entladevorgängen kommt es in Batterien zu einer Wärmeentwicklung, wobei die umgesetzte Wärme abgeführt werden muss, um einen Wärmestau zu vermeiden und eine für die elektrische Effizienz der Batterie optimale Betriebstemperatur aufrecht zu erhalten. Andererseits kann es bei niedrigen Temperaturen förderlich sein, die Betriebstemperatur einer Batterie zu erhöhen, um die elektrische Effizienz zu verbessern. Die elektrische Effizienz kann z.B. anhand eines Wirkungsgrades, der elektrischen Kapazität oder einer momentanen Leistungsentfaltung (Leistungsabgabe) bemessen werden. Zur Temperierung von Batterien werden derzeit meist Heizvorrichtungen in Kombination mit Kompressionskälteanlagen eingesetzt. Nachteilig hieran ist der hohe Bauraumbedarf. Zudem weisen Kompressionskälteanlagen eine schlechte Umweltbilanz bzw. Ökobilanz auf. Das Betreiben einer Batterie im Bereich ihrer optimalen Betriebstemperatur verlängert zudem deren Lebensdauer.

Die Aufgabe der Erfindung ist es, eine Möglichkeit zur Verlängerung der Lebensdauer von Batterien aufzuzeigen.

Diese Aufgabe wird gelöst durch ein Batteriesystem mit den Merkmalen des Anspruches 1. Die Merkmale der abhängigen Ansprüche betreffen vorteilhafte und bevorzuge Weiterbildungen. Bevorzugte Verwendungen des erfindungsgemäßen Batteriesystems sind Gegenstand der nebengeordneten Ansprüche.

Erfindungsgemäß wird ein Batteriesystem vorgeschlagen, umfassend wenigstens eine Batterie, wobei ferner wenigstens ein Peltierelement umfasst ist, welches der Kühlung und/oder Erwärmung wenigstens einer Batterie dient. Bevorzugt dient dieses Peltierelement zumindest der Kühlung einer Batterie.

Durch die Kühlung und/oder Erwärmung mittels des Peltierelements kann die Lebensdauer einer Batterie, bzw. einer Vielzahl von Batterien, verlängert werden.

Eine Batterie ist aus einer Vielzahl von gestapelten Zellen gebildet sein, wie dies aus dem Stand der Technik hinreichend bekannt ist. Ferner kann erfindungsgemäß auch eine Gruppe von Batterien vorgesehen sein. Die Batterie weist auch einen Elektrolyt auf. Dieser Elektrolyt kann Lithium-Ionen aufweisen.

Unter einem Peltierelement wird im Sinne dieser Erfindung ein thermoelektrischer Wandler verstanden, welcher basierend auf dem Peltier-Effekt bei Stromdurchfluss eine nutzbare Temperaturdifferenz erzeugt. Der Peltier-Effekt kann allgemein wie folgt beschrieben werden: Bringt man die beiden Enden eines Metalls oder Halbleiters in Kontakt mit einem anderen Metall oder Halbleiter und leitet einen elektrischen Gleichstrom hindurch, so erwärmt sich die eine Kontaktstelle, während sich die andere abkühlt. Dadurch entsteht zwischen den beiden Enden eine Temperaturdifferenz, die bevorzugt zum Kühlen oder bei Umkehr der elektrischen Polung auch zum Beheizen genutzt werden kann. Peltierelemente sind mit unterschiedlichen Spezifikationen als verbaufertige Komponenten am Markt erhältlich. Diese weisen im Kühlbetrieb bspw. eine kalte Seite oder Fläche und eine warme Seite oder Fläche auf. Die kalte Seite kann zum Kühlen und nach Umpolung auch zum Beheizen verwendet werden. Gängige Peltierelement sind typischerweise auf Halbleiterbasis (p- und/oder n-Leiter) aufgebaut.

Wesentliche Vorteile von Peltierelementen sind deren geringe bauliche Größen und die Vermeidung von bewegten Bauteilen und Komponenten. Zudem kommen Peltierelemente ohne Kühlfluide aus, wie diese bspw. bei Kältemaschinen und insbesondere Kompressionskältemaschinen benötigt werden, weswegen Peltierelemente unter anderem eine gute Umweltbilanz aufweisen. Erfindungsgemäß sind damit die oben genannten mit dem Stand der Technik einhergehenden Nachteile behoben. Ferner sind Peltierelemente, insbesondere im Vergleich zu den bisher eingesetzten Heizvorrichtungen und Kompressionskälteanlagen, verhältnismäßig preiswert.

Bevorzugt sind mehrere Peltierelemente umfasst, die insbesondere auch unterschiedlichen Typs bzw. unterschiedlicher Bauart sein können.

Gemäß einer bevorzugten Weiterbildung ist vorgesehen, dass das Peltierelement durch elektrisches Umpolen wahlweise zum Kühlen und/oder Erwärmen der Batterie dient oder dienen kann. Durch ein bevorzugt wahlweises Umkehren des Stromflusses ermöglicht das Peltierelement sowohl ein Kühlen als auch Beheizen der Batterie. Damit kann eine umfängliche Temperierung (Thermostatierung) der Batterie erreicht werden, um diese im Bereich ihrer optimalen Betriebstemperatur betreiben zu können. Bevorzugt umfasst das Batteriesystem eine entsprechende Vorrichtung zum Umpolen bzw. Umkehren des Stromflusses.

Gemäß einer bevorzugten Weiterbildung ist vorgesehen, dass das Peltierelement einer Konvektion ausgesetzt ist. Bei dieser Konvektion erfolgt ein Wärmeübergang zwischen dem Peltierelement und einem anströmenden oder vorbeiströmenden Gas, wobei es sich insbesondere um Luft handelt. Dies kann bspw. ein Fahrtwind an einem Kraftfahrzeug sein. Das Peltierelement kann auf seiner warmen Seite und/oder der kalten Seite einer Konvektion ausgesetzt sein. Um die Konvektion zu verbessern, kann das Peltierelement mit Kühlkörpern oder dergleichen versehen werden. Bevorzugt handelt es sich bei der Konvektion um eine freie Konvektion. Alternativ kann es sich bei der Konvektion aber auch um eine erzwungene Konvektion handeln, wozu bspw. wenigstens eine Gebläseeinrichtung, wie insbesondere ein Lüfter, umfasst sein kann. Eine solche Gebläseeinrichtung kann situationsabhängig zugeschaltet werden. Bezüglich des Kühlbetriebs ist bevorzugt die warme Seite des Peltierelements einer Konvektion ausgesetzt. Durch Kombination mit Kühlkörpern und insbesondere mit einer Gebläseeinrichtung auf dieser warmen Seite kann erreicht werden, dass die kalte Seite des Peltierelements noch kälter wird.

Gemäß einer bevorzugten Weiterbildung ist vorgesehen, dass das Peltierelement an einem Gehäuse der Batterie angeordnet ist. Unter einem Gehäuse ist jegliche Einrichtung zu verstehen, welche wenigstens eine Batterie zumindest teilweise umgibt oder umschließt. Dies kann bspw. auch eine Halterung für die Batterie sein. Bezüglich des Kühlbetriebs ist bevorzugt die kalte Seite des Peltierelements mit dem Gehäuse thermisch verbunden oder reicht durch eine Öffnung in einen Innenraum hinein, der durch das Gehäuse gebildet wird. Damit kann die kalte Seite des Peltierelements der Kühlung der Batterie dienen. Eine Befestigung des Peltierelements kann bspw. mittels Verklebung, Vernietung, Verschraubung oder dergleichen erfolgen.

Gemäß einer bevorzugten Weiterbildung ist vorgesehen, dass das Peltierelement an einer Wärmeleitplatte angeordnet ist. Eine solche Wärmeleitplatte steht in thermischer Verbindung mit einer zu kühlenden und/oder zu beheizenden Batterie und dient bevorzugt dazu, Wärme von der Batterie abzuführen und/oder dieser zuzuführen. Bevorzugt ist eine Wärmeleitplatte aus einem Metall gebildet und kann insofern auch als Wärmeleitblech bezeichnet werden. Bezüglich des Kühlbetriebs ist bevorzugt die kalte Seite des Peltierelements mit der Wärmeleitplatte thermisch verbunden. Eine Befestigung des Peltierelements an der Wärmeleitplatte kann bspw. mittels Verklebung, Vernietung, Verschraubung oder dergleichen erfolgen. An einer Wärmeleitplatte kann auch eine Vielzahl von Peltierelementen angeordnet sein.

Es ist vorgesehen, dass die Batterie aus einer Vielzahl von Zellen gebildet ist, wobei wenigsten zwischen zwei dieser Zellen eine Wärmeleitplatte angeordnet ist, die zu wenigstens einer Seite nach außen geführt ist. Hierdurch kann die Wärme aus dem Inneren einer Batterie sehr gut nach außen abgeführt werden. Umgekehrt kann gegebenenfalls auch eine Wärme sehr gut ins Innere der Batterie eingebracht werden.

Zum Einbringen einer Wärme kann alternativ und/oder ergänzend auch eine Heizfolie zwischen einzelnen Zellen angeordnet werden. Eine Heizfolie kann auch an wenigstens einer Außenfläche der Batterie angeordnet werden.

Es ist vorgesehen, dass wenigstens eine Wärmeleitplatte umfasst ist, die mit einem Gehäuse (der Batterie) in thermischer Verbindung steht, wobei wenigstens ein Peltierelement an diesem Gehäuse angeordnet ist.

Es ist eine Steuereinheit umfasst, welche mittels des Peltierelements eine Regelung der Temperatur der Batterie ermöglicht. Ergänzend kann mittels dieser Steuereinrichtung auch eine optionale Gebläseeinrichtung zur Verbesserung einer Konvektion gesteuert werden. Die Steuereinheit ermöglicht eine prädiktive Regelung der Temperatur der Batterie. Die prädiktive Regelung basiert auf einer Vorhersage des künftigen Systemverhaltens. Idealerweise erfolgt die Regelung mittels überschreibbarer Handlungsanweisungen, welche die Konditionierung des Batteriesystems entsprechend der Betriebsweisen und/oder der Alterung bedarfsgerecht einregeln. Die Regelung erfolgt bevorzugt softwarebasiert. Bevorzugt ermöglicht die Steuereinheit auch eine Steuerung und/oder Regelung des Ladezustands der Batterie. Insbesondere kann mittels der Steuereinheit auch ein Umpolen des Peltierelements gesteuert und/oder geregelt werden.

Gemäß einer bevorzugten Weiterbildung ist vorgesehen, dass die Steuereinheit am Gehäuse angeordnet ist. Bevorzugt ist die Steuereinheit im Gehäuse integriert und unterliegt damit in vorteilhafter Weise gleichfalls einer Kühlung oder Beheizung durch das Peltierelement.

Das erfindungsgemäße Batteriesystem ist insbesondere für die Verwendung als Energiespeicher in einem Kraftfahrzeug vorgesehen.

Das erfindungsgemäße Batteriesystem ist insbesondere für die Verwendung als stationäres Batteriesystem vorgesehen.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: ein erstes Ausführungsbeispiel in einer schematischen Ansicht, und
- Fig. 2: ein zweites Ausführungsbeispiel in einer schematischen Ansicht.

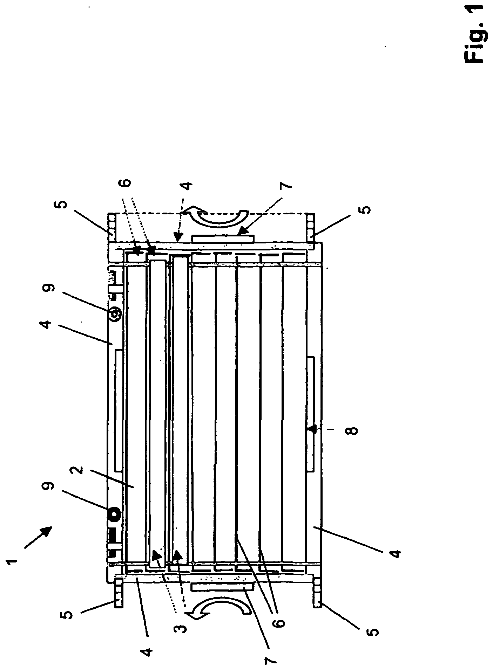

Die Fig. 1 zeigt ein erstes Ausführungsbeispiel eines Lithium-Ionen-Batteriesystems das insgesamt mit 1 bezeichnet ist. Dieses Lithium-Ionen-Batteriesystem 1 umfasst eine Lithium-Ionen-Batterie 2, welche aus einem Zellenstapel mit einer Vielzahl von gestapelten Zellen 3 gebildet ist. Die Zellen 3 sind in einer nicht näher spezifizierten Art und Weise elektrisch kontaktiert.

Die Lithium-Ionen-Batterie 2 ist einem Gehäuse 4 angeordnet, welches hier lediglich beispielhaft die Lithium-Ionen-Batterie 2 vollständig umschließt. Das Gehäuse 4 kann bspw. mit Rechteck-Profilstangen aufgebaut sein. Das Gehäuse 4 weist Befestigungsvorrichtungen 5 auf. Die Befestigungsvorrichtungen 5 sind gemäß der Darstellung zwischen der rechten und der linken Gehäuseseite höhenversetzt angeordnet, um eine gemeinsame Verschraubung mehrerer Gehäuse bei einer Gruppierung zu ermöglichen. Zudem sind elektrische Leitungen 9 im Gehäuse 4 angeordnet.

Zwischen den einzelnen Zellen 3, sowie zum Abschluss des Zellenstapels, ist jeweils eine Wärmeleitplatte 6 angeordnet, die gemäß der Darstellung jeweils rechts- und linksseitig aus dem Zellenstapel herausreichen bzw. überstehen und die dazu dienen, Wärme aus dem Inneren des Zellenstapels nach außen abzuführen, um die Lithium-Ionen-Batterie 2 zu kühlen, oder Wärme ins Innere einzubringen, um die Lithium-Ionen-Batterie 2 gegebenenfalls auch beheizen zu können. Die Wärmeleitplatten 6 sind außenseitig abgewinkelt und gemäß der Darstellung mit der rechts- und linksseitigen Gehäusewand des Gehäuses 4 thermisch verbunden. Die Wärmeleitplatten 6 dienen gleichfalls auch der mechanischen Fixierung der Zellen 3.

An der rechts- und linksseitigen Gehäusewand des Gehäuses 4 ist jeweils ein Peltierelement 7 angeordnet. Die Funktionsweise eines solchen Peltierelements ist oben ausführlich erläutert. Die Peltierelemente 7 sind derart angeordnet, dass bezüglich des Kühlbetriebs deren kalte Seite mit dem Gehäuse 4 thermisch verbunden ist. Hierdurch kann über eine thermische Verbindung zwischen dem Gehäuse 4 und den Wärmeleitplatten 6 eine Kühlung im Inneren der Lithium-Ionen-Batterie 2 herbeigeführt werden, bzw. die Wärme aus dem Inneren der Lithium-Ionen-Batterie 2 über die Peltierelemente 7 abgeführt werden. Selbstverständlich kann auch eine andere Anzahl von Peltierelementen 7 vorgesehen sein.

Die Peltierelemente 7 sind an ihren warmen Seiten, dies sind gemäß der Darstellung die vom Gehäuse 4 wegweisenden Flächen, einer Konvektion ausgesetzt, bei der die Wärme an einen vorbeiströmenden Luftstrom abgegeben wird. Die Luftströmung ist durch Strömungspfeile dargestellt. Zur Verbesserung der Konvektion können die warmen Seiten der Peltierelemente 7 mit Kühlkörpern versehen werden. Zudem kann optional eine Gebläseeinrichtung, wie insbesondere ein Lüfter, umfasst sein, um die wärmeabführende Luftströmung zu verstärken.

Durch Umkehr der elektrischen Polung können die Peltierelemente 7 auch zum Beheizen der Lithium-Ionen-Batterie 2 eingesetzt werden. In diesem Fall wird die gemäß obiger Definition kalte Seite eines Peltierelements 7 zur warmen Seite und die warme Seite zur kalten Seite. Die Wärme wird über die Wärmeleitplatten 6 in das Innere der Lithium-Ionen-Batterie 2 eingebracht. Durch wahlweises Umpolen kann eine umfängliche Temperierung der Lithium-Ionen-Batterie 2 erreicht werden.

Das erfindungsgemäße Lithium-Ionen-Batteriesystem 1 umfasst ferner eine Steuereinheit 8, welche die Temperierung der Lithium-Ionen-Batterie 2 mittels der Peltierelemente 7 steuert und/oder regelt. In dem gezeigten Ausführungsbeispiel ist die Steuereinheit 8 im Gehäuse 4 integriert, bzw. ist in einem dafür vorgesehenen Bauraum des Gehäuses 4 angeordnet, und unterliegt damit in vorteilhafter Weise gleichfalls der Temperierung durch die Peltierelemente 7. Gemäß der Darstellung kann die Steuereinheit 8 optional auch im dafür vorgesehenen Bauraum im oberen Gehäusebereich angeordnet werden.

Gemäß einem nicht gezeigten Ausführungsbeispiel sind die Peltierelemente 7 derart angeordnet, dass deren kalte Flächen durch Gehäuseöffnungen in den durch das Gehäuse 4 gebildeten Innenraum hineinragen, wodurch ein Kühlen und/oder Beheizen dieses Innenraums und damit eine situationsabhängige Temperierung der Lithium-Ionen-Batterie 2 herbeigeführt werden kann. Die kalten Flächen können im Inneren des Gehäuses mit Wärmeleitplatten thermisch verbunden sein.

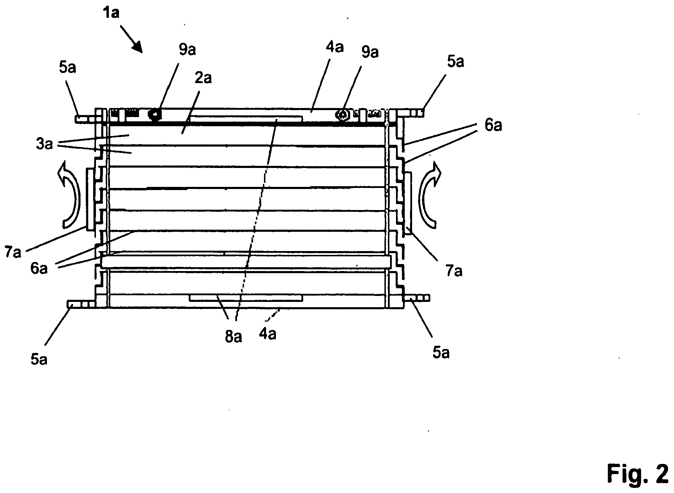

Die Fig. 2 zeigt ein zweites Ausführungsbeispiel eines Lithium-Ionen-Batteriesystems das hier insgesamt mit 1a bezeichnet ist. Gleiche Komponenten sind mit den gleichen Bezugszeichen wie in der Fig.1 und dem Zusatz "a" bezeichnet.

Der wesentliche Unterschied zum ersten Ausführungsbeispiel nach der Fig. 1 liegt in der Ausbildung der Wärmeleitplatten 6a. Diese sind in ihrem Außenbereich als profilierte Rahmenabschnitte ausgebildet, um ein einfaches Stapeln der Zellen 3a zu ermöglichen. Hierzu können diese Rahmenabschnitte quasi ineinander gesteckt werden, wobei die Wärmeleitplatten 6a gleichfalls auch zur mechanischen Fixierung der Zellen 3a dienen. Die Rahmenabschnitte ersetzen die seitlichen Gehäuseteile. Die seitlichen Außenflächen eines Zellenstapels können optional mit einer Aluminiumfolie oder bspw. auch mit einer Schrumpffolie kaschiert sein, um die Stabilität zu verbessern.

Abweichend zum ersten Ausführungsbeispiel sind die Peltierelemente 7a unmittelbar an den seitlichen Außenflächen des Zellenstapels bzw. an den Rahmenabschnitten der Wärmleitplatten 6a angeordnet, derart, dass diese mehrere Wärmeleitplatten 6a überspannen. Bevorzugt ist vorgesehen, dass pro Wärmeleitplatte 6a wenigstens ein daran angeordnetes und thermisch verbundenes Peltierelement vorgesehen ist. Hierdurch kann der Wirkungsgrad der thermischen Kopplung im Vergleich zum ersten Ausführungsbeispiel verbessert werden.

## Patentansprüche

1. Batteriesystem (1), umfassend wenigstens eine Batterie (2), die aus einer Vielzahl von Zellen (3) in Form eines Zellenstapels gebildet ist, und wenigstens ein Peltierelement (7), welches der Kühlung und/oder Erwärmung der Batterie (2) dient, **dadurch gekennzeichnet, dass** zwischen den einzelnen Zellen (3) sowie zum Abschluss des Zellenstapels Wärmeleitplatten (6) angeordnet sind, die jeweils zu wenigstens einer Seite aus dem Zellenstapel überstehend herausreichen, außenseitig abgewinkelt sind und mit der an der jeweiligen Seite befindlichen Gehäusewand des Gehäuses (4) thermisch verbunden sind, und dass an dieser Gehäusewand des Gehäuses (4) jeweils wenigstens ein Peltierelement 7 derart angeordnet ist, dass über eine thermische Verbindung zwischen dem Gehäuse (4) und den Wärmeleitplatten (6) eine Kühlung oder eine Erwärmung der Batterie bewirkt werden kann, und dass das Batteriesystem (1) eine Steuereinheit (8) aufweist, welche mittels des Peltierelements (7) eine Regelung der Temperatur der Batterie (2) ermöglicht, wobei diese Regelung eine prädiktive Regelung der Temperatur der Batterie (2) ist.

2. Batteriesystem (1) nach Anspruch 1, **dadurch gekennzeichnet, dass** das Peltierelement (7) durch elektrisches Umpolen wahlweise zum Kühlen und/oder Erwärmen der Batterie (2) dient.

3. Batteriesystem (1) nach Anspruch 1 oder 2, **dadurch gekennzeichnet, dass** das Peltierelement (7) einer Konvektion ausgesetzt ist.

4. Batteriesystem (1) nach einem der vorausgehenden Ansprüche, **dadurch gekennzeichnet, dass** das Peltierelement (7) an einem Gehäuse (4) der Batterie (2) angeordnet ist.

5. Batteriesystem (1) nach einem der vorausgehenden Ansprüche, **dadurch gekennzeichnet, dass** das Peltierelement (7) an einer Wärmeleitplatte (6) angeordnet ist.

6. Batteriesystem (1) nach Anspruch 5, **dadurch gekennzeichnet, dass** die Batterie (2) aus einer Vielzahl von Zellen (3) gebildet ist, wobei wenigsten zwischen zwei Zellen (3) eine Wärmeleitplatte (6) angeordnet ist, die zu wenigstens einer Seite nach außen geführt ist.

7. Batteriesystem (1) nach Anspruch 6, **dadurch gekennzeichnet, dass** wenigstens zwei Wärmeleitplatten (6) umfasst sind, die gleichfalls auch der mechanischen Fixierung der Zellen (3) dienen.

8. Batteriesystem (1) nach einem der vorausgehenden Ansprüche, **dadurch gekennzeichnet, dass** wenigstens eine Wärmeleitplatte (6) umfasst ist, die mit einem Gehäuse (4) in thermischer Verbindung steht, wobei wenigstens ein Peltierelement (7) an diesem Gehäuse (4) angeordnet ist.

9. Batteriesystem nach einem der vorausgehenden Ansprüche, **dadurch gekennzeichnet, dass** die Steuereinheit (8) am Gehäuse (4) angeordnet ist.

10. Verwendung eines Batteriesystems (1) nach einem der vorausgehenden Ansprüche als Energiespeicher in einem Kraftfahrzeug.

11. Verwendung eines Batteriesystems nach einem der vorausgehenden Ansprüche als stationäres Batteriesystem.

## Claims

1. Battery system (1), comprising at least one battery (2), which is formed from a plurality of cells (3) in the form of a cell stack, and at least one Peltier element (7), which is used for cooling and/or heating the battery (2), **characterised in that** heat conducting plates (6) are arranged between the individual cells (3) and to terminate the cell stack, each of which plates extends out of and beyond the cell stack towards at least one side, is angled on the outside and thermally connected to the housing wall of the housing (4) located on the respective side, and **in that** at least one Peltier element (7) each is arranged on this housing wall of the housing (4) in such a way that a cooling or heating of the battery can be effected via a thermal connection between the housing (4) and the heat conducting plates (6), and **in that** the battery system (1) comprises a control unit (8), which facilitates a control of the temperature of the battery (2) by means of the Peltier element (7), this control being a predictive control of the temperature of the battery (2).

2. Battery system (1) according to claim 1, **characterised in that** the Peltier element (7) is used optionally to cool and/or heat the battery (2) by reversing its electric polarity.

3. Battery system (1) according to claim 1 or 2, **characterised in that** the Peltier element (7) is exposed to a convection process.

4. Battery system (1) according to any of the preceding claims, **characterised in that** the Peltier element (7) is located on a housing (4) of the battery (2).

5. Battery system (1) according to any of the preceding claims, **characterised in that** the Peltier element (7) is located on a heat conducting plate (6).

6. Battery system (1) according to claim 5, **characterised in that** the battery (2) is formed from a plurality of cells (3), wherein a heat conducting plate (6) led to the outside on at least one side is located between at least two cells (3).

7. Battery system (1) according to claim 6, **characterised in that** at least two heat conducting plates (6) are comprised, which are used for the mechanical fixing of the cells (3) as well.

8. Battery system (1) according to any of the preceding claims, **characterised in that** at least one heat conducting plate (6) is comprised, which is thermally connected to a housing (4), the at least one Peltier element (7) being located on this housing (4).

9. Battery system (1) according to any of the preceding claims, **characterised in that** the control unit (8) is located on the housing (4).

10. Use of a battery system (1) according to any of the preceding claims as an energy storage device in a motor vehicle.

11. Use of a battery system according to any of the preceding claims as a stationary battery system.

## Revendications

1. Système (1) de batterie, comprenant au moins une batterie (2), constituée d'une pluralité de cellules (3) en forme d'un empilement de cellules, et au moins un élément Peltier (7) qui sert au refroidissement et/ou au chauffage de la batterie (2), **caractérisé en ce qu'**entre chacune des cellules (3) ainsi que pour fermer l'empilement de cellules sont disposées des plaques conductrices de chaleur (6) qui respectivement au moins d'un côté font saillie de l'empilement de cellules, sont déroulées vers l'extérieur et sont reliées thermiquement à la paroi du boîtier (4) se trouvant sur le côté respectif et **en ce que** sur ladite paroi du boîtier (4) est disposé respectivement au moins un élément Peltier (7) de sorte qu'au moyen d'une liaison thermique entre le boîtier (4) et les plaques conductrices de chaleur (6) puisse se produire un refroidissement ou un chauffage de la batterie et **en ce que** le système (1) de batterie présente une unité de commande (8) qui au moyen de l'élément Peltier (7) permet un réglage de la température de la batterie (2), ledit réglage étant un réglage prédicatif de la température de la batterie (2).

2. Système (1) de batterie selon la revendication 1, **caractérisé en ce que** l'élément Peltier (7) sert sélectivement à refroidir et/ou chauffer la batterie (2) au moyen de l'inversion des pôles électriques.

3. Système (1) de batterie selon la revendication 1 ou la revendication 2, **caractérisé en ce que** l'élément Peltier (7) est exposé à une convection.

4. Système (1) de batterie selon l'une quelconque des revendications précédentes, **caractérisée en ce que** l'élément Peltier (7) est disposé sur un boîtier (4) de la batterie (2).

5. Système (1) de batterie selon l'une quelconque des revendications précédentes, **caractérisé en ce que** l'élément Peltier (7) est disposé sur une plaque conductrice de chaleur (6).

6. Système (1) de batterie selon la revendication 5, **caractérisé en ce que** la batterie (2) est constituée d'une pluralité de cellules (3), au moins entre deux cellules (3) étant disposée une plaque conductrice de chaleur (6) qui est guidée au moins d'un côté vers l'extérieur.

7. Système (1) de batterie selon la revendication 6, **caractérisé en ce qu'**il est compris au moins deux plaques conductrices de chaleur (6) qui servent simultanément également de fixation mécanique des cellules (3).

8. Système (1) de batterie selon l'une quelconque des revendications précédentes, **caractérisé en ce qu'**il est compris au moins une plaque conductrice de chaleur (6) qui est en communication thermique avec un boîtier (4), au moins un élément Peltier (7) étant disposé sur ledit boîtier (4).

9. Système de batterie selon l'une quelconque des revendications précédentes, **caractérisé en ce que** l'unité de commande (8) est disposée sur le boîtier (4).

10. Utilisation d'un système (1) de batterie selon l'une quelconque des revendications précédentes en tant qu'accumulateur d'énergie dans un véhicule automobile.

11. Utilisation d'un système de batterie selon l'une des revendications précédentes comme système de batterie stationnaire.
